# EUROPEAN PATENT APPLICATION

(11) **EP 4 354 721 A1**
(43) Date of publication of application: **17.04.2024**
(21) Application number: 22820169.5
(22) Date of filing: 06.06.2022
(51) Int. Cl.: H02M 7/12, B60L 1/00, B60L 9/18, H02M 7/48, H02P 5/46

(54) **POWER SUPPLY SYSTEM FOR RAILWAY VEHICLE AND AUXILIARY POWER SUPPLY METHOD FOR RAILWAY VEHICLE**

(30) Priority: 07.06.2021 JP 2021094957
(71) Applicant: Hitachi, Ltd., Tokyo 100-8280 (JP)
(72) Inventor: OKUDA, Kazuma, Tokyo 100-8280 (JP); SEKIZAWA, Toshihiko, Tokyo 100-8280 (JP); KAWAMOTO, Takehiro, Tokyo 100-8280 (JP); OKAWARA, Hiroshi, Tokyo 100-8280 (JP)
(74) Representative: Mewburn Ellis LLP
(86) International application number: PCT/JP2022/022697
(87) International publication number: WO 2022/259988

(57) **Abstract**

Provided is a power supply system for a railway vehicle, the power supply system converting alternating-current power in such a manner that the power can be used by an auxiliary machine of the railway vehicle, the power supply system comprising: a plurality of converters each of which converts the alternating-current power into direct-current power; an auxiliary power supply device which converts the direct-current power output by the converters into alternating-current power to output the alternating-current power to the auxiliary machine; a plurality of diodes which are respectively provided in current paths from the plurality of converters to the auxiliary power supply device and which prevent the direct-current power from flowing backward; and current detectors which respectively measure currents flowing through the diodes. The power supply system controls an output voltage of at least any one of the plurality of converters on the basis of current values measured by the plurality of current detectors. The power supply system further comprises a main electric motor which drives the railway vehicle and an inverter which drives the main electric motor, and the converter supplies power to both the auxiliary power supply device and the inverter. According to this power supply system, parallel redundant driving can be performed in a rational manner while avoiding overheating due to uneven overloads between the plurality of converters.

## Description

### Technical Field

The present invention relates to a power supply system for a railway vehicle and an auxiliary power supply method for a railway vehicle.

### Background Art

As a railway vehicle drive system having a configuration for supplying power from a DC power supply to an auxiliary power supply device, for example, a system has been proposed which includes a converter connected to a secondary winding of a main transformer to convert AC power into DC power, an inverter that supplies drive power from the DC power to a main electric motor, and an auxiliary power supply device that supplies power from the DC power to an auxiliary machine, and supplies power from a plurality of converters to the auxiliary power supply device (see PTL 1).

### Citation List

### Patent Literature

PTL 1: JP 6072912 B2

### Summary of Invention

### Technical Problem

The technique described in PTL 1 is capable of parallelizing main hardware and ensuring system redundancy. However, PTL 1 does not describe a control method of demanding and supplying power so as to reduce a load and alleviate heat generation when there is an overheating tendency due to occurrence of uneven overloads among a plurality of converters.

The present invention has been made in view of the above problems, and an object of the present invention is to provide a power supply system for a railway vehicle capable of performing parallel redundant operation in a rational manner while avoiding overheating due to uneven overloads between a plurality of converters.

### Solution to Problem

The present invention to solve the above problems is a power supply system for a railway vehicle for converting alternating-current power to be usable by an auxiliary machine of a railway vehicle, the power supply system including: a plurality of converters each of which converts the alternating-current power into direct-current power; an auxiliary power supply device which converts the direct-current power output by the converters into alternating-current power to output the alternating-current power to the auxiliary machine; a plurality of diodes which are respectively provided in current paths from the plurality of converters to the auxiliary power supply device and which prevent the direct-current power from flowing backward; and current detectors which respectively measure currents flowing through the diodes, in which an output voltage of at least any one of the plurality of converters is controlled on the basis of current values measured by the plurality of current detectors.

### Advantageous Effects of Invention

According to the present invention, it is possible to provide a power supply system for a railway vehicle capable of performing parallel redundant operation in a rational manner while avoiding overheating due to uneven overloads between a plurality of converters.

### Brief Description of Drawings

[FIG. 1] FIG. 1 is a schematic circuit diagram showing a main part of a power supply system for a railway vehicle (hereinafter, "the present system") according to an embodiment of the present invention.
[FIG. 2] FIG. 2 is a block diagram illustrating a function of controlling a DC voltage between a plurality of converters in the present system of FIG. 1.

### Description of Embodiments

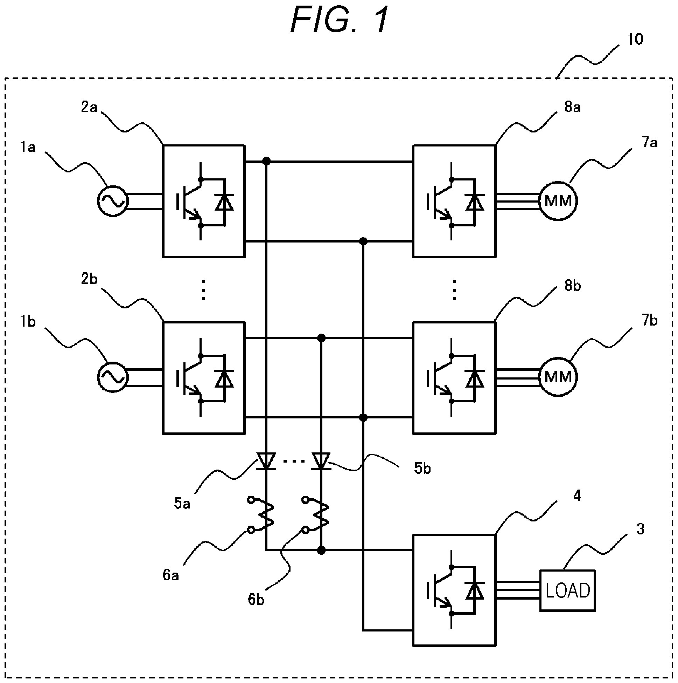

Hereinafter, a present system 10 will be described with reference to the drawings. FIG. 1 is a schematic circuit diagram illustrating a main part of the present system. In FIG. 1, the present system 10 includes alternating-current power supplies 1a and 1b (collectively 1), converters 2a and 2b (collectively 2), an auxiliary machine (load) 3, an auxiliary power supply device 4, diodes 5a and 5b (collectively 5), current detectors 6a and 6b (collectively 6), main electric motors 7a and 7b (collectively 7), inverters 8a and 8b (collectively 8), and a controller.

The alternating-current power supply 1 is a set of an overhead line stretched around an alternating-current electrified section and supplied with power, and a facility configuration receiving power from the overhead line via a pantograph or the like. The converter 2 is connected to the alternating-current power supply 1 and converts alternating-current power into direct-current power. The auxiliary power supply device 4 converts direct-current power output from the converter 2 into power suitable for the auxiliary machine 3.

The diodes 5a and 5b are a connection form that prevents backflow of the converters 2a and 2b and the auxiliary power supply device 4 and constitutes an OR logic circuit. The OR logic circuit inputs the outputs of the plurality of converters 2a and 2b to the auxiliary power supply device 4 in descending order. The current detectors 6a and 6b detect currents flowing through the diodes 5a and 5b, respectively.

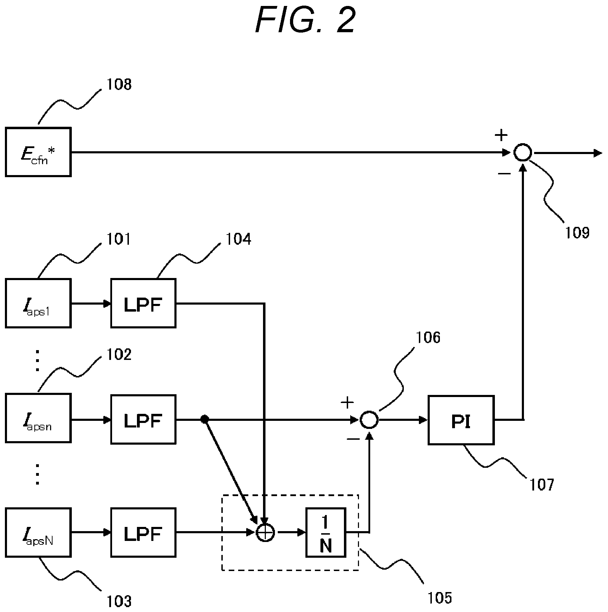

The inverters 8a and 8b convert direct-current power output from the converters 2a and 2b into AC power, and supply the alternating-current power exclusively for driving the main electric motors 7a and 7b, respectively. The controller means the entire control function of the present system 10, which will be described later with reference to FIG. 2.

The converter 2a supplies direct-current power for supplying power to the main electric motors 7a and 7b and the auxiliary machine 3 to the inverter 8a and the auxiliary power supply device 4. At this time, a control device of the converter 2a (a part of a controller (not illustrated)) controls the converter 2a such that a direct-current voltage provided to the inverter 8a and the auxiliary power supply device 4 becomes constant regardless of fluctuations in power supplied to the main electric motors 7a and 7b and the auxiliary machine 3.

The converter 2b performs control similar to that of the converter 2a. That is, the converter 2b supplies direct-current power for supplying power to the main electric motors 7a and 7b and the auxiliary machine 3 to the inverter 8b and the auxiliary power supply device 4. At this time, a control device (not illustrated) of the converter 2b controls the converter 2b such that the direct-current voltage provided to the inverter 8b and the auxiliary power supply device 4 becomes constant regardless of the fluctuations in the power supplied to the main electric motors 7a and 7b and the auxiliary machine 3.

The present system 10 does not limit the number of the converters 2, the auxiliary power supply devices 4, the diodes 5, the current detectors 6, and the inverters 8. That is, the present system 10 includes an embodiment in which two or more converters 2 supply power to one inverter 8, an embodiment in which one converter 2 supplies power to two or more inverters 8, and an embodiment in which two or more converters 2 supply power to the auxiliary power supply device 4.

The auxiliary power supply device 4 receives the supply of the direct-current power from both converters 2a and 2b. At this time, since the diodes 5a and 5b are respectively arranged between the auxiliary power supply device 4 and the converters 2a and 2b, power is supplied to the auxiliary power supply device 4 from the converter 2 having a high direct-current voltage.

The diode 5a, 5b has a characteristic of preventing the power from flowing backward from the auxiliary power supply device 4 to the converter 2a, 2b. With this characteristic, even in a situation where a failure in which a direct-current unit is short-circuited occurs in any converter 2 and the supply of direct-current power is stopped, the supply of power is continued and the availability is maintained. That is, the diode 5a, 5b prevents energization from a healthy converter different from the failed converter to the short-circuit portion of the failed converter, and the healthy converter continues power supply to the auxiliary power supply device 4.

In the present system 10, the diodes 5a and 5b are arranged between the auxiliary power supply device 4 and the converters 2a and 2b, but electric components other than the diodes can be used as a mechanism for preventing power from flowing backward from the auxiliary power supply device 4 to the converter.

In addition, preferably, as a method of suppressing the influence of a steep change in the current flowing through the diodes 5a and 5b in the control to be described later, a configuration in which electric components (not illustrated) such as inductors having an effective inductance component are arranged in series with respect to the diodes 5a and 5b is also conceivable.

When the direct-current voltage of the converter 2a is higher than that of the converter 2b, the direct-current power is supplied from the converter 2a to the auxiliary power supply device 4 by the effect of the diodes 5a and 5b. At this time, when the direct-current voltage of the converter 2b is higher than the direct-current voltage of the auxiliary power supply device 4, the direct-current power is supplied from the converter 2b to the auxiliary power supply device 4, but the power supply amount from the converter 2b is smaller than the power supply amount from the converter 2a. When the direct-current voltage of converter 2b is lower than the direct-current voltage of the auxiliary power supply device 4, power is not supplied from the converter 2b.

Since the direct-current voltage to be controlled by the converter 2a, 2b is affected by the tolerance of a voltage detector (not illustrated), a detection error in the control device, and the like, an error occurs in a recognition value of the direct-current voltage handled by the control device with respect to a true value. For example, even if the recognition values of the control devices of the direct-current voltages of the converters 2a and 2b are the same value, it is conceivable that the true direct-current voltages of the converters 2a and 2b are not the same value.

In addition, since the converter 2a, 2b rectifies the alternating-current power supply 1a, 1b to convert the alternating-current power into direct-current power, it is widely known that voltage vibration having a component twice the power supply frequency of the alternating-current power supply 1a, 1b is generated in the converted direct-current power.

For example, when the direct-current voltage of the converter 2a continues to be higher than that of the converter 2b, direct-current power is always supplied from the converter 2a to the auxiliary power supply device 4. At this time, the converter 2b is in a state of not supplying power to the auxiliary power supply device 4 although the converter 2b has power supply capability to the auxiliary power supply device 4.

As described above, in a state where the overall outputs of the plurality of converters 2a and 2b cannot be utilized, the converter 2a is required to have power supply capability enough to satisfy the power demand of the auxiliary power supply device 4. That is, the converter 2a is required to have power supply performance that enables power supply to the auxiliary power supply device 4 with one converter and cooling performance that can withstand the power supply performance.

However, when a converter having power supply performance and cooling performance is applied, in a case where DC power is supplied from both the converter 2a and the converter 2b, the power supply performance and the cooling performance of one converter cannot be used to the maximum. In the present system 10, the direct-current voltage of the converter 2a, 2b is controlled on the basis of the current flowing through the diode 5a, 5b detected by the current detector 6a, 6b.

FIG. 2 is a block diagram illustrating a function of controlling a direct-current voltage between the plurality of converters 2a and 2b in the present system 10 of FIG. 1. The control block diagram of FIG. 2 illustrates control of the direct-current voltage of the Nth converter 2n (not illustrated) in a case where the system 10 includes N converters.

As shown in FIG. 2, the controller of the present system 10 calculates an average value 105 from the current 101 flowing from the first converter to the auxiliary power supply device 4 to the current 103 flowing from the Nth converter 2n to the auxiliary power supply device 4, including the current 102 flowing from the Nth converter 2n to the auxiliary power supply device 4.

At this time, since it can be assumed that each of the currents 101 to 103 includes a component having a high frequency exceeding control responsiveness due to an influence of rectification ripple of each converter or the like, it is preferable to remove a radio frequency component by means such as a low-pass filter 104.

The controller calculates a deviation 106 of the current 102 flowing from the Nth converter 2n to the auxiliary power supply device 4 with respect to the average value 105 of currents flowing from the respective converters 2a and 2b to the auxiliary power supply device 4.

At this time, as illustrated in FIG. 1, when the present system 10 includes N converters 2a, 2b... 2n, the controller may substitute the average value 105 used in the calculation of the deviation 106 with the current flowing from any one of the converters other than the Nth converter to the auxiliary power supply device 4.

The controller applies feedback control including a proportional term and an integral term to the deviation 106 to calculate a correction amount 107 of the direct-current voltage of the Nth converter 2n.

The controller uses a value obtained by adding and subtracting the correction amount 107 to and from a command amount 108 of the direct-current voltage of the Nth converter 2n as a final command amount 109 of the direct-current voltage of the Nth converter 2n, and controls the converter by constant voltage control (not illustrated) using the command amount 109 as an input.

For example, the controller calculates the deviation of the current flowing through the diode 5a with respect to the average value of the currents flowing through the diodes 5a and 5b, and controls the converter 2a to add or subtract the correction amount to or from the command value of the direct-current voltage of the converter 2a so that the deviation becomes zero.

According to the present system 10, it is possible to prevent the concentration of the power load and the thermal load on any of the plurality of converters 2a and 2b from continuing. The supply amount of direct-current power to the auxiliary power supply device 4 of the converter 2a and the converter 2b can be equalized. Note that the controller of the present system 10 does not necessarily equalize the power loads of the plurality of converters 2a, 2b... 2n, and may perform control to suppress heat generation of the overheating converter.

In addition, in the present system 10, for example, when the converter 2b is stopped, the power supplied from the inverter 8a to the main electric motors 7a and 7b is limited such that the inverter 8a supplies power to the main electric motors 7a and 7b by reserve power obtained by subtracting the power required by the auxiliary power supply device 4 from the power that can be supplied by the converter 2a.

In addition, although a tensile force or a braking force of the railway vehicle decreases by the inverter 8a limiting the power supplied to the main electric motors 7a and 7b, the inverter that receives power supply from another converter that does not supply power to the auxiliary power supply device 4 increases the power supplied to the main electric motors 7a and 7b, thereby suppressing a decrease in the tensile force or the braking force.

According to the present system 10, even if one or more of the plurality of converters 2a, 2b... 2n that supply power to the auxiliary power supply device 4 are stopped, the availability can be maintained and the operation of the railway vehicle can be continued. That is, the present system 10 can continue the operation by making use of the redundancy of the plurality of converters 2a, 2b... 2n, without deteriorating the power supply capability of the auxiliary power supply device 4 and at the same time without deteriorating the acceleration/deceleration performance of the railway vehicle.

A power supply system for a railway vehicle (present system) according to an embodiment of the present invention can be summarized as follows.
[1] The present system 10 is a power supply system for a railway vehicle for converting alternating-current power obtained from the outside to be usable by an auxiliary machine 3 of the railway vehicle. The present system 10 includes a plurality of converters 2a and 2b, one or more auxiliary power supply devices 4, a plurality of diodes 5a and 5b, and a controller. Note that the controller means the entire control function illustrated in FIG. 2.

The plurality of converters 2a and 2b convert alternating-current power obtained from the outside into direct-current power. One or more auxiliary power supply devices 4 convert direct-current power output from the converters 2a and 2b into alternating-current power and output the alternating-current power to the auxiliary machine 3. The plurality of diodes 5a and 5b are interposed in each of current paths from the plurality of converters 2a and 2b to the auxiliary power supply device 4 to prevent the direct-current power from flowing backward.

The plurality of current detectors 6a and 6b measure currents flowing through the diodes 5a and 5b, respectively. The controller controls output voltages of the plurality of converters on the basis of respective current values measured by the plurality of current detectors 6a and 6b. Specifically, in the present system 10, when the power supply and demand for the plurality of converters 2a and 2b are unequal, or when there is an excess of demand exceeding the heating standard in any of the converters, the output voltage of at least any one of the plurality of converters 2a and 2b is controlled to be increased or decreased in order to correct the excess.

That is, when there is an overheating tendency due to uneven overloads or the like between the plurality of converters 2a and 2b, the controller performs control to reduce the load and suppress heat generation. That is, the controller suppresses a heat generation amount by relatively decreasing the output current with respect to the converter that exceeds the quality assurance standard or is close to the quality assurance standard and has less margin according to the degree of heat generation. As a result, the plurality of converters 2a and 2b perform parallel redundant operation in a rational manner within the range of the quality assurance standard.

[2] In [1] described above, the present system 10 further includes main electric motors 7a and 7b that drive the railway vehicle, and inverters 8a and 8b that drive the main electric motors 7a and 7b. The converters 2a and 2b supply power to both the auxiliary power supply device 4 and the inverters 8a and 8b. The controller controls the converters 2a and 2b, the output capacities of which are limited, so as to suppress overheating if there is uneven heat generation, and continues reasonable parallel redundant operation.

In the auxiliary power supply device 4, the one-side terminals of the plurality of diodes 5a and 5b receive power from any of the plurality of converters 2a and 2b. The anodes of the plurality of diodes 5a and 5b are connected to the positive direct-current output terminals of the plurality of converters 2a and 2b, respectively, and the cathodes of the plurality of diodes 5a and 5b are butted with each other and connected to the input terminal of the auxiliary power supply device 4.

In other words, an OR logic circuit including two (a plurality of) diodes 5a and 5b is configured. The OR logic circuit obtains a large number of outputs from any one diode 5 having the high (highest) voltage output value, and obtains corresponding outputs in descending order of the voltage output value from the diodes 5 having the voltage output value equal to or lower than the one diode 5. Note that, among the plurality of converters 2a and 2b, those that output at a high voltage may have relatively light loads as power demand in inverters 8a and 8b to which they supply power.

In this case, since the converter of the light load has reserve power, even if a larger load is additionally set, the load can be naturally allowed to some extent. In a similar case, if the added load of the converter of the heavy load is not set to light, the total becomes overload. The OR logic circuit including the diodes 5a and 5b functions to automatically maintain such a power demand-supply balance. As a result, the controller suppresses intensive overheating of the plurality of converters 2a and 2b due to uneven overloads between the plurality of converters 2a and 2b, and performs parallel redundant operation in a rational manner.

[3] In the above [2], in the present system 10, when one or more converters 2n (not illustrated) among the converters 2 that supply power to the auxiliary power supply device 4 are stopped, the controller limits the output power of the inverters 8a and 8b connected to other healthy converters 2a and 2b that supply power to the auxiliary power supply device 4. That is, from the viewpoint of the total amount of power supply and demand in one set of railway vehicles, when the number of converters 2 that supply power in a healthy operation decreases and the total supply power also decreases, the present system 10 suppresses the total demand within the range in which safety can be guaranteed.

As a result, if the train decelerates more than usual, the operation of the train can be continued. Therefore, specifically, even when one or more converters 2n (not illustrated) of the converters 2 fail and stop, it is possible to avoid a situation in which the train stops on the main line while slowly traveling.

[4] In the above [3], in the present system 10, the controller controls the one or more inverters 8b (an example) connected to the converter 2b (an example) that does not supply power to the auxiliary power supply device 4 to bear the limited amount of the output power of the inverters 8a and 8b whose output power is limited. In other words, it is as follows.

In the present system 10, in a situation of the above [3], the controller performs control so that the inverter 8b (an example) compensates for the decrease in the output of the main electric motor 7a to which the inverter 8a (an example) with the limited output power supplies power. At this time, the inverter 8b also limits a certain amount of output power.

On the other hand, the converter 2b is in a situation of not supplying power to the auxiliary power supply device 4 although the converter 2b is healthy, and thus some reserve power remains. Under such a situation, the output power increased in a reasonable range by the converter 2b having reserve power drives the main electric motor 7b via the inverter 8b.

At this time, the controller controls the main electric motor 7b to compensate for the decrease in the output of the main electric motor 7a. That is, the inverter 8b bears the decrease in the output of the main electric motor 7a to which the inverter 8a with the limited output power supplies power, resulting in enhancement of the main electric motor 7b. As described above, even in a case where one or more converters 2n (not illustrated) of the converters 2 fail and stop, the train operation can be continued while the power shortage is borne by the others, so that the availability can be maintained. Although the two converters 2a and 2b are illustrated in FIG. 1, if the total number is large, the availability can be further increased accordingly.

The auxiliary power supply method for a railway vehicle (the present method) according to the embodiment of the present invention can be summarized as follows.

[5] The present method is an auxiliary power supply method for a railway vehicle for converting alternating-current power obtained from the outside to be usable by an auxiliary machine 3 of the railway vehicle. The plurality of converters 2a and 2b convert alternating-current power obtained from the outside into direct-current power.

The direct-current power output from the converters 2a and 2b is converted into alternating-current power by one or more auxiliary power supply devices 4 and output to the auxiliary machine 3. The plurality of diodes 5a and 5b are interposed in each of current paths from the plurality of converters 2a and 2b to the auxiliary power supply device 4 for backflow prevention. The plurality of current detectors 6a and 6b measure currents flowing through the plurality of diodes 5a and 5b, respectively. The controller controls the output voltage of at least any one of the plurality of converters 2a and 2b to be increased or decreased on the basis of the current values measured by the plurality of current detectors 6a and 6b.

The controller used in the present method performs control so that the power supply performance and the cooling performance can be effectively used between the plurality of converters 2a and 2b that convert the alternating-current power obtained from the outside of the vehicle into the direct-current power. The plurality of converters 2a and 2b are used to supply power to the main electric motors 7a and 7b that drive the vehicle and to supply power to the auxiliary power supply device 4 that distributes power to the auxiliary machine 3 of the vehicle. With such a configuration, for example, when the load of the main electric motor 7 exclusively using any converter 2 becomes a heavy load for some reason, the converter 2 that supplies power to the heavy load is brought into an overheat state.

According to the controller used in the present method, between the respective converters 2a and 2b, the output of the converter 2 having a relatively large current value is suppressed on the basis of the current values measured by the current detectors 6a and 6b, whereby overheating due to the uneven overloads can be reduced. As described above, according to the present method, in a railway vehicle that is often operated as a plurality of trains, it is possible to perform parallel redundant operation in a rational manner throughout the train configuration while avoiding overheating due to uneven overloads between the plurality of converters 2a and 2b. As a result, according to the present method, the power supply performance and the cooling performance of the converter can be effectively utilized throughout the train configuration.

### Reference Signs List

10 power supply system for railway vehicle (present system)
1a, 1b alternating-current power supply
2a, 2b converter
3 auxiliary machine
4 auxiliary power supply device 4
5a, 5b diode
6a, 6b current detector
7a, 7b main electric motor
8a, 8b inverter
101 current flowing from first converter to auxiliary power supply device 4
102 current flowing from Nth converter 2n to auxiliary power supply device 4
103 current flowing from Nth converter 2n to auxiliary power supply device 4
104 low pass filter
105 average value of current flowing from first to Nth converters to auxiliary power supply device 4
106 deviation of current flowing from Nth converter 2n to auxiliary power supply device 4 with respect to average value of current flowing from each converter to auxiliary power supply device 4
107 correction amount of direct-current voltage of Nth converter 2n
108 command amount of direct-current voltage of Nth converter 2n
109 command amount of direct-current voltage of final Nth converter 2n

## Claims

1. A power supply system for a railway vehicle for converting alternating-current power to be usable by an auxiliary machine of a railway vehicle, the power supply system comprising:
a plurality of converters each of which converts the alternating-current power into direct-current power;
an auxiliary power supply device which converts the direct-current power output by the converters into alternating-current power to output the alternating-current power to the auxiliary machine;
a plurality of diodes which are respectively provided in current paths from the plurality of converters to the auxiliary power supply device and which prevent the direct-current power from flowing backward; and
current detectors which respectively measure currents flowing through the diodes, wherein
an output voltage of at least any one of the plurality of converters is controlled on a basis of current values measured by the plurality of current detectors.

2. The power supply system for a railway vehicle according to claim 1, further comprising
a main electric motor that drives the railway vehicle;
and
an inverter that drives the main electric motor, wherein
the converter supplies power to both the auxiliary power supply device and the inverter, and
the auxiliary power supply device receives power supplied from any of the plurality of converters by one-side terminals of the plurality of diodes.

3. The power supply system for a railway vehicle according to claim 2, wherein output power of an inverter connected to another healthy converter that supplies power to the auxiliary power supply device is limited when one or more converters that supply power to the auxiliary power supply device are stopped.

4. The power supply system for a railway vehicle according to claim 3, wherein the limited amount of the output power of the inverter is borne by one or more inverters connected to a converter that does not supply power to the auxiliary power supply device.

5. An auxiliary power supply method for a railway vehicle for converting alternating-current power to be usable by an auxiliary machine of a railway vehicle, the auxiliary power supply method comprising:
converting the alternating-current power into direct-current power by a plurality of converters;
converting the direct-current power output from the converters into alternating-current power by an auxiliary power supply device and outputting the alternating-current power to an auxiliary machine;
preventing direct-current power from flowing backward by a plurality of diodes provided in each of current paths from the plurality of converters to the auxiliary power supply device;
measuring a current flowing through each of the diodes; and
controlling an output voltage of at least any one of the plurality of converters on a basis of the measured current value.

6. The auxiliary power supply method for a railway vehicle according to claim 5, wherein the railway vehicle is driven by a main electric motor,
the main electric motor is driven by an inverter,
the converter supplies power to both the auxiliary power supply device and the inverter, and
the auxiliary power supply device receives power supplied from any of the plurality of converters by one-side terminals of the plurality of diodes.

7. The auxiliary power supply method for a railway vehicle according to claim 6, wherein output power of an inverter connected to another healthy converter that supplies power to the auxiliary power supply device is limited when one or more converters that supply power to the auxiliary power supply device are stopped.

8. The auxiliary power supply method for a railway vehicle according to claim 7, wherein the limited amount of the output power of the inverter is borne by one or more inverters connected to a converter that does not supply power to the auxiliary power supply device.
